Europäisches Patentamt

(19) European Patent Office

Office européen des brevets

(11) Publication number : **0 457 535 A2**

(12) # EUROPEAN PATENT APPLICATION

(21) Application number : **91304285.9**

(22) Date of filing : **13.05.91**

(51) Int. Cl.⁵ : **B62D 53/06, B62D 53/08**

(30) Priority : **12.05.90 GB 9010693**

(43) Date of publication of application :
**21.11.91 Bulletin 91/47**

(84) Designated Contracting States :
**AT BE CH DE DK ES FR GB GR IT LI LU NL SE**

(71) Applicant : **JOHN G. RUSSELL (TRANSPORT) LIMITED**
**Alison Place, Gartcosh**
**Glasgow G69 8ES, Scotland (GB)**

(72) Inventor : **Russell, John Graham**
**Landerha', Strathaven**
**Lanarkshire, ML10 6QA, Scotland (GB)**

(74) Representative : **MacDougall, Donald Carmichael et al**
**Cruikshank & Fairweather 19 Royal Exchange Square**
**Glasgow G1 3AE, Scotland (GB)**

(54) Trailer support apparatus.

(57) A trailer (12) has ground engaging wheels (16) at a rear end thereof and is adapted for detachable coupling with a tractor unit (14) at a front end thereof. The trailer (12) includes a trailer platform (26) with at least one support member (18,20) disposed near the front end, the support member (18,20) including a hydraulic ram (180,186) and having a ground-engageable foot (19,21) at one end. When the front end of the trailer platform (26) is supported by the support member (18,20) and the front end of the trailer (12) is separated from a tractor unit (14) the hydraulic ram (180,186) may be activated too contract to lower the front end of the trailer platform (26) relative to the rear of the platform (26) to form a ramp and thus facilitate loading of the trailer (12).

EP 0 457 535 A2

The present invention relates to trailer support apparatus for a trailer for coupling to a tractor unit, and in particular to a trailer support apparatus for a trailer of the type having a fifth wheel for coupling to a tractor unit.

One of the most commonly encountered transport vehicles is the articulated lorry which consists of a tractor and a trailer having a platform supported along its length by wheels and connected at its front end to the tractor. Such lorries are normally used to transport heavy loads such as a number of motor cars which are driven up a ramp provided at the rear end of the trailer. Such ramps tend to be relatively steep and are therefore difficult to use. Alternatively, loads can be lifted onto the trailer using special lifting equipment but this is expensive and time consuming.

It is desirable that a lorry should be able to be loaded or unloaded in any suitable location simply, quickly and safely, without the use of any additional lifting and loading equipment.

According to the present invention there is provided a trailer, the rear end of said trailer having ground engaging wheels and the front end of said trailer being capable of being detachably coupled to a tractor, said trailer comprising a trailer platform with at least one support member disposed near the front end thereof, said support member including a hydraulic ram and having a rod with a ground-engageable foot at the free end thereof, the arrangement being such that when the front end of said trailer platform is supported by said member and the front end of said trailer separated from a tractor, said hydraulic ram may be actuated to contract so that the front end of said trailer platform is lowered relative to the rear end thereof to form a ramp.

Preferably said trailer includes two support members, one disposed at each side of said trailer platform.

When the front end of said trailer platform is lowered relative to the rear end, the trailer platform pivots about the axle of the forwardmost pair of ground engaging wheels on which the trailer platform is mounted. Conveniently therefore, these wheels are disposed substantially to the rear of said trailer platform so that when the front end of the platform is lowered the ramp formed has a shallow incline.

Preferably also said support members are movable between a generally vertical in-use position laterally outboard of the trailer platform, and a generally horizontal out-of-use position beneath said trailer platform.

Preferably also each of said support members is slidably mounted on a respective slideway disposed beneath said trailer platform, said slideways being secured to the chassis of said trailer and extending transversely across at least part of the width of said trailer. The slideways may be disposed side by side and offset from each other longitudinally of said trailer.

The support members are also pivotally coupled to their respective slideways so that when the support members have been pulled to a position outboard of said trailer platform, the support members may be rotated into a generally vertical support position in which their respective hydraulic rams may be actuated to extend to support the front end of said trailer platform.

Preferably a winder mechanism is provided to reduce the manual effort required to rotate said support members into their vertical positions.

Preferably also a locking mechanism is provided whereby said support members may be locked in either their generally horizontal out-of-use position, or their generally vertical support position.

The hydraulic rams are preferably adapted for operation by the hydraulic system of the associated tractor, said hydraulic rams being connected to said hydraulic system by long length flexible hoses.

An embodiment of the present invention will now be described. This description is made by way of example and not by way of limitation and is made in combination with the accompanying drawings in which:-

Fig 1 is an elevational view of an articulated lorry having a trailer in accordance with an embodiment of the present invention;

Fig 2 is an elevational view of the trailer of the lorry shown in Fig 1, the front end of trailer being shown in a lowered position;

Fig 3 is a plan view of the lorry shown in Fig 1 with the trailer alongside the tractor;

Fig 4 is an underneath plan view of the trailer shown in Figs 1 to 3;

Fig 5 is a plan view of various constituent parts of a support mechanism for the trailer shown in Figs 1 to 4;

Fig 5A is a diagrammatic sectional view of some of the parts shown in Fig 5, drawn to a larger scale;

Fig 6 is a perspective view of some of the parts shown in Fig 5;

Fig 7 is a diagrammatic view of a winder unit which forms part of the support mechanism;

Fig 8 is a diagrammatic view of a support member which forms part of the support mechanism, and a slideway to which the support member is attached;

Fig 8A is an elevational view of the slideway and a part of the trailer frame;

Fig 9A is a plan view of a slidably mounted support unit for the hydraulic ram shown on Fig 8; and

Fig 9B is a perspective view of the support unit shown in Fig 9A.

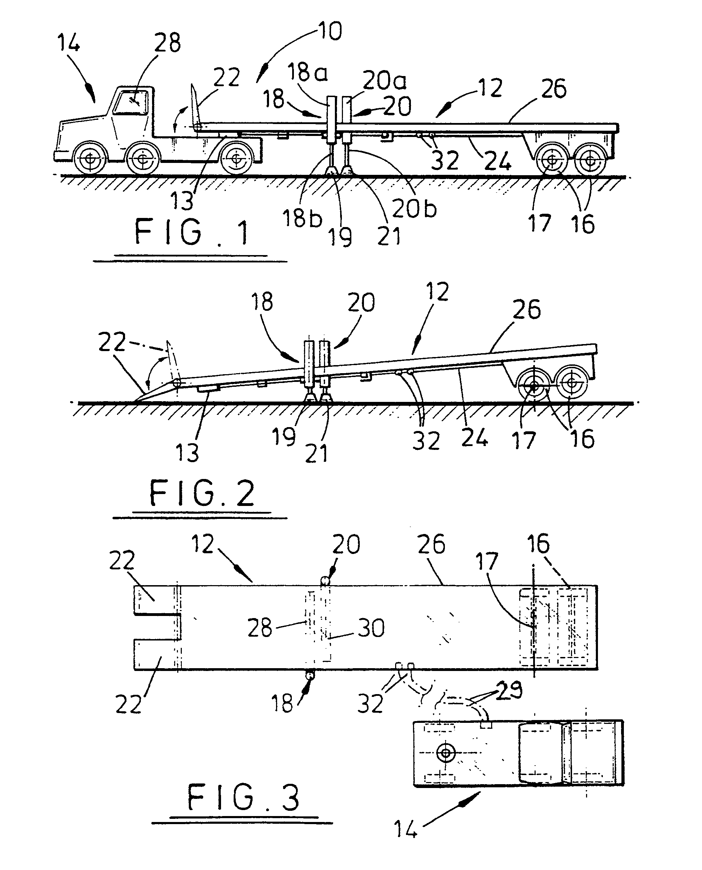

Fig 1 shows an articulated lorry 10 having a tractor 14 connected via a fifth wheel or pivotal trailer coupling 13 to the front end of a trailer 12, the rear end of which includes two sets of ground-engaging wheels 16. A pair of support members 18 and 20, one on each side of the trailer 12, are located about one third down the length of the trailer 12 from the front end and offset from each other along the length of trailer 12. When the support members 18 and 20 are in the extended position shown in Fig 1, the tractor 14 may be driven away from the front end of trailer 12, leaving the front end of trailer 12 supported by members 18 and 20.

The support members 18 and 20 each incorporate a hydraulic ram having a cylinder portion 18a, 20a, an extensible rod 18b, 20b, and a pivotably mounted foot 19, 21 at the free end of rods 18b, 20b respectively. In order to support the front end of trailer 12, the rams are actuated so that rods 18b and 20b extend until feet 19 and 21 engage the ground allowing tractor 14 to be detached from the front end of trailer 12. The rams of members 18 and 20 may subsequently be actuated to contract so the front end of trailer 12 is lowered to form a ramp as shown in Fig 2. The trailer 12 pivots about axle 17 of the forwardmost pair of ground engaging wheels 16 which are disposed as near to the rear of trailer 12 as possible to allow the front end of trailer 12 to be lowered to form a ramp having a relatively shallow incline. No wheels are provided at the front end of trailer 12, thus allowing the front end of trailer 12 to be lowered as hereinbefore described. A pair of hinged ramp members 22 are provided at the front end of trailer 12. The members 22 may be fastened in their raised position, as shown in Fig 1, by securing turnbuckles (not shown) and may be manually rotated into the lowered position, as shown in Fig 2, where they take up the remaining small distance between the lowered front end of trailer 12 and the ground. With trailer 12 in the lowered position shown in Fig 2, vehicles may be loaded onto the trailer 12, the angle of inclination of the ramp being such that, for example, motor vehicles may be simply driven onto the trailer 12. For this particular application, the trailer 12 is double floored to support the wheels of vehicles loaded onto the trailer.

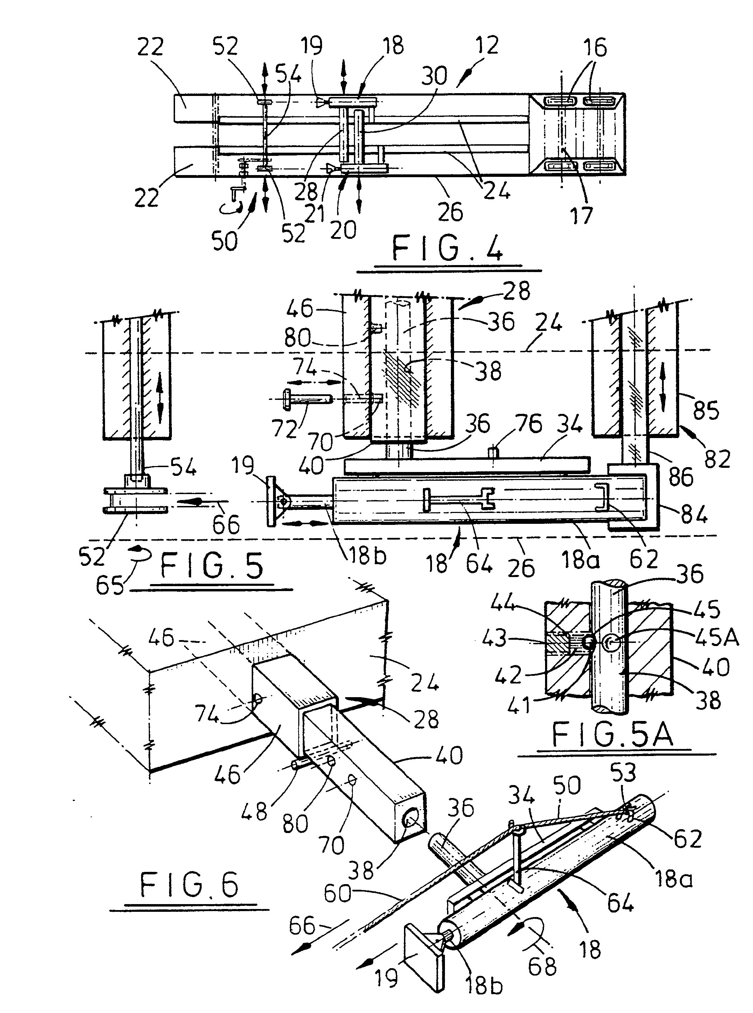

Reference is now also made to Figs. 3 and 4 of the drawings. The trailer 12 has a longitudinal chassis consisting of two beam members 24 which extend the whole length of the trailer 12 and are located inwardly of the edges of the trailer platform 26. A pair of hollow box slides 28 and 30 are mounted underneath the trailer platform 26, each of the slides 28, 30 extending through both beam members 24 transversely across the trailer 12 almost the entire width of the platform 26, each slide 28, 30 extending from a respective side of the platform 26. The slides 28, 30 are offset from each other and are arranged substantially in parallel with each other. The support members 18 and 20 are laterally slidably and also pivotally coupled to slides 28 and 30 respectively thus allowing support members 18 and 20 to be pushed into a generally horizontal stowed position (as best shown in Fig 4). This stowed position is underneath the platform 26 and inboard of the platform 26 edges. When the support members 18 and 20 are not in use, that is, when the front end of trailer 12 is supported by tractor 14, the members 18, 20 may be rotated and pushed into this horizontal stowed position as will be described later in detail.

When the support members 18 and 20 are required for use, they are pulled out of their stowed positions by manual effort and are rotated into the vertical support position shown in Figs 1 to 3 in a manner which will be described later.

The hydraulic rams of members 18 and 20 are operated by the hydraulic system of the tractor 14 and are controlled from a control panel within the cab compartment 28 of tractor 14. The hydraulic system of tractor 14 is connected to the hydraulic rams 18 and 20 by two flexible hoses 29 (best seen in Fig 3) of such length that the tractor 14 may be separated from trailer 12 to allow the front end of trailer 12 to be lowered. The tractor 14 may be driven alongside the trailer 12 to allow the operator to observe and control the operation of lowering the front end of the trailer 12. The flexible hoses 29 are connected to quick release couplings 32 on the underside of platform 26, the couplings 32 being connected to the respective rams of members 18, 20 by further flexible hoses (not shown).

Reference is now made to Figs 5 and 6 of the drawings which show the connection between support member 18 and slide 28. It is understood that the connection between member 20 and slide 30 is substantially a mirror image of the connection between member 18 and slide 28. The member 18 is welded to a generally rectangular heavy carrier plate 34 which extends along almost the entire length of one side of the hydraulic cylinder 18a of member 18. A 5.08cm (2 inch) diameter cylindrical rod 36 projects at right angles from the plate 34 and is received in a bore 38 of a generally elongate carrier member 40 having a generally square cross-section. The rod 36 is capable of rotating within bore 38 so that the member 18 can be rotated about rod 36 between the horizontal and vertical positions hereinbefore described. The rod 36 is held in either the horizontal or vertical position by a spring loaded ball latch mechanism which consists of a ball 41, a spring 42 and a threaded locating stud 43 all of which are disposed in an aperture 44 in carrier member 40 (as best shown in Fig 5A). Rod 36 has two recesses 45 and 45A spaced at 90° from each other around rod 36. Spring 42 pushes ball 41 into either of recesses 45 or 45A to hold the rod in either the horizontal or vertical position respectively. The ball latch mechanism also prevents axial movement of rod 36 relative to bore 38. The carrier member 40 is slidably mounted in a hollow box slideway 46 which extends through both beam members 24. The carrier member 40 is slidably movable relative to slideway 46 to allow member 18 to be manually pulled out from beneath the platform 26. In order to clear the edge of platform 26, the member 18 must be pulled out 15.24 to 20.32cm (6 to 8 inches). A small roller 48 (Fig. 6) is disposed at the end of slideway 46 to reduce friction between the carrier member 40 and the slideway 46.

The rod 36 is welded to plate 34 in a position near the end of the cylinder 18a from which the rod 18b extends. Therefore, when the member 18 is rotated to its vertical position, most of the length of the cylinder 18a extends above the level of platform 26.

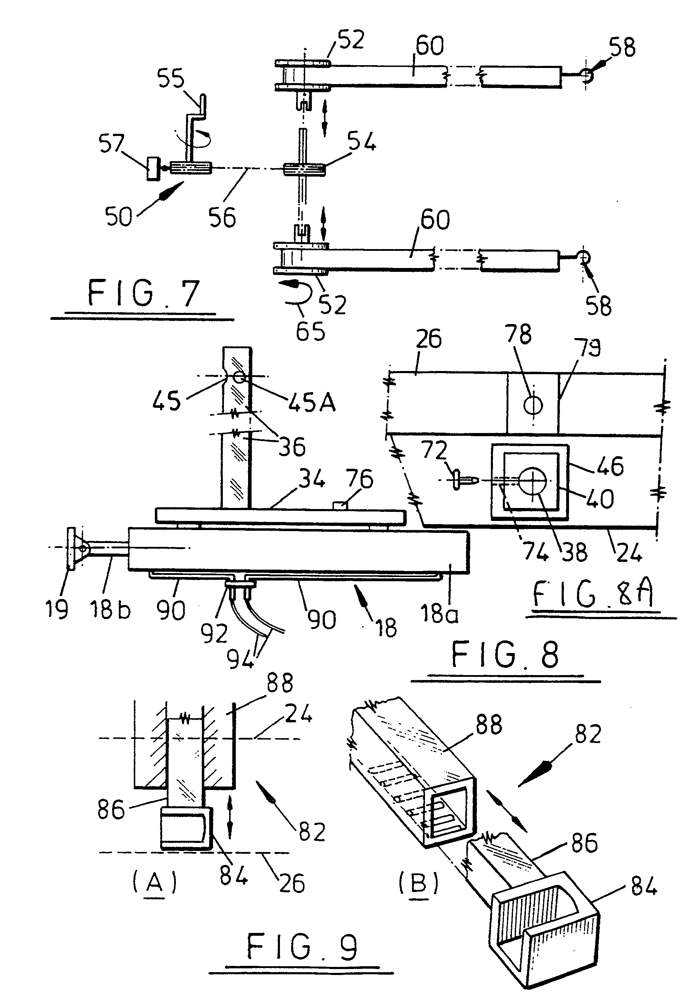

Reference is now also made to Fig 7 of the drawings which shows a winder mechanism 50 which is used to facilitate rotation of the members 18 and 20 between the stowed and support positions. The members 18 and 20 are very heavy due to the necessary loading which they are required to support on the trailer 12. It would be difficult therefore to manually rotate the members 18 and 20 and the winder mechanism 50 reduces the amount of effort required. The winder mechanism 50 is disposed near the front end of trailer 12 (as shown in Fig 4) and includes two tape reels 52, one of which is disposed on each side of the trailer 12. The tape reels 52 are mounted on a common driveshaft 54 and are connected to the shaft 54 by a key way, each reel 52 being capable of sliding 15.24 to 20.32cm (6 to 8 inches) along the shaft 54 so they may be pulled out from under platform 26 and disposed in alignment with their respective members 18, 20. The drive shaft 52 is connected to a handle 55 through a chain and sprocket arrangement 56 to provide mechanical advantage. Rotation of the handle 55 causes corresponding rotation of each of the reels 52. A ratchet mechanism 57 is connected to the chain and sprocket arrangement 56 so that handle 55 does not spin if the handle 55 is released during the operation of rotating either member 18 or 20.

Only member 18 is shown in Figs 5 and 6 although it is understood that a similar mechanism is provided at the other side of trailer 12 for member 20. A hook 58 (Fig. 6) is provided at the free end of tape 60 wound around reel 52. In order to rotate member 18, hook 58 is attached to an eyelet 62 at the free end of cylinder 18a and tape 60 is passed over an offset guide arm 64 which projects at right angles from member 18. When reel 52 is rotated in the direction of arrow 65 (Fig. 6), tape 60 is pulled in the direction of arrow 66 and a rotational force is applied to the free end of member 18 causing member 18 to rotate in the direction of arrow 68 (Fig. 6) into the vertical position hereinbefore described. The offset guide arm may be folded into an out of use position alongside cylinder portion 18a as shown in Fig 5. The members 18 and 20 are too heavy to be simultaneously rotated into their vertical positions and are therefore rotated one at a time by attaching hook 58 to the respective eyelet 62.

Reference is now made to Figs 5,8 and 8A of the drawings which show a locking arrangement whereby member 18 may be locked in either its stowed position or its support position. The carrier member 40 has a first aperture 70 for receiving a locking pin 72 to lock member 18 in the stowed position. Pin 72 may be inserted into aperture 70, the pin 72 extending through a corresponding bore 74 in the slideway 46 to securely fasten the carrier member 40 to slideway 46. Pin 72 must be removed before the member 18 may be pulled out from under the platform 26.

When member 18 has been pulled out from under platform 26 and rotated into its vertical support position, the member 18 is pushed back towards the platform 26 so that a pin 76 on plate 34 is received in an aperture 78 of a plate 79 mounted on the side wall of platform 26, thus securing member 18 in the vertical position. The carrier member 40 has a second aperture 80 and when member 18 is in the locked vertical position, this second aperture 80 is disposed in alignment with bore 74 of slideway 46. The pin 72 may therefore be inserted into aperture 80, the pin 72 extending through bore 74 and preventing axial movement of carrier member 40 relative to slideway 46. A substantially identical locking mechanism is provided at the other side of trailer 12 for member 20.

Reference is now made to Figs 5, 9A and 9B of the drawings which show a support unit 82 for supporting the free end of cylinder 18a when the member 18 is in its horizontal position. The support unit 82 consists of a cup shaped member 84 for receiving the free end of cylinder 18a. The cup shaped member 84 is provided at the free end of an elongate support carrier 86 which is slidably counted within a box shaped support carrier slideway 88 extending through beam members 24. A number of rollers 90 are provided in slideway 88 to reduce friction between support carrier 86 and slideway 88. A similar support unit is also provided for member 20.

Reference is lastly made to Fig 8 of the drawings which shows the hydraulic connections to the hydraulic ram of member 18. The ram is double acting and therefore flexible hoses 90 are connected to both ends of cylinder portion 18a through a safety valve 92 which is provided so that the hydraulic mechanism of the ram is locked in the event that the main hydraulic hoses are severed or disconnected. The safety valve 92 is connected to quick release couplings 32 (Fig. 3) by flexible hoses 94. The hydraulic ram of member 20 also has a similar safety valve.

Various modifications may be made to the embodiment hereinbefore described without departing from the scope of the present invention. Any suitable number of support members may be provided near the front of the trailer. For example, two support members may be provided at each side of the trailer, each of the members being movable to a stowed position. The support members need not be movable to a horizontal stowed position beneath the trailer provided that the ram support members are movable to a position where these members do not touch the ground. The trailer need not be an open trailer and could, for example be an enclosed trailer which may be used for carrying livestock such as cattle or horses. These animals could simply walk into the trailer when the front end of the trailer is lowered. Further, the trailer could equally be of the form suitable by towing by agricultural tractors or other vehicles, if suitable provision is made to allow the towing hitch engaging arm of the trailer to be moved to allow lowering of the front end of the trailer.

An advantage associated with the present invention is that the trailer may be simply and safely loaded in any suitable location. There are no steep ramps to be negotiated and therefore for example, motor vehicles may be driven onto a trailer in a quick, efficient and safe manner. There is no need for any additional lifting equipment for lifting the load onto the trailer.

## Claims

1. A trailer (12) having ground engaging wheels (16) at a rear end thereof and adapted for detachable coupling with a tractor unit (14) at a front end thereof, the trailer (12) including a trailer platform (26) with at least one support member (18,20) disposed near the front end thereof, the support member (18,20) including a hydraulic ram (180,186) and having a ground-engageable foot (19,21) at the free end thereof, and when the front end of the trailer platform (26) is supported by the support member (18,20) and the front end of the trailer (12) is separated from a tractor unit (14) the hydraulic ram (180,186) may be activated to contract to lower the front end of the trailer platform (26) relative to the rear of the platform (26) to facilitate loading of the trailer (12).

2. The trailer of claim 1, wherein the hydraulic ram has a rod (186) and the foot (19,21) is mounted to the free end of the rod (186).

3. The trailer of claim 1, wherein the trailer (12) includes two support members (18,20) one disposed at each side of the trailer platform (26).

4. The trailer of claim 1, wherein the wheels (16) are disposed substantially to the rear of the platform (26) to provide a relatively shallow incline when the front end of the platform (26) is lowered.

5. The trailer of claim 4, wherein the trailer has at least two sets of wheels (16) provided at the rear end thereof and when the front end of the trailer platform (26) is lowered the platform pivots about the axle (17) of the forwardmost pair of wheels (16).

6. The trailer of claim 3, wherein the support members (18,20) are moveable between a generally vertical in-use position and a generally horizontal stowed position.

7. The trailer of claim 6, wherein the support members (18,20) are further moveable between a position laterally outboard of the trailer platform (26), in the in-use position, and a position laterally inboard of the trailer platform (26), in the stowed position.

8. The trailer of claim 7, wherein the support members (18,20) are located beneath the trailer platform (26) in the stowed position.

9. The trailer of claim 7, wherein each of the support members (18,20) is slidably mounted on a respective slideway (28,30) mounted beneath the platform (26) and extending transversely across at least part of the width of the trailer, and the support members (18,20) are further pivotally coupled to the respective slideways (18,20).

10. The trailer of claim 9, wherein the slideways (28,30) are disposed side-by-side and offset from each other longitudinally of the platform (26).

11. The trailer of claim 9, wherein a manually operated mechanism (50) is provided to facilitate rotation of the support members (18,20) from the horizontal stowed positions to the vertical in-use positions.

12. The trailer of claim 11, wherein the mechanism (50) includes a reel (52) rotatably mounted to the trailer platform (26) and carrying a flexible, inextensible elongate member (60) for attachment to a respective support member (18,20) spaced from the pivotal connection between the support member (18,20) and the slideway (28,30), rotation of the reel (52) to take in the flexible, inextensible elongate member (60) causing rotation of the support member (18,20).

13. The trailer of claim 12, wherein an offset guide (64) for the flexible, inextensible, elongate member (60) is provided on each support member (18,20) to provide additional moment to turn the member the respective support member (18,20) is in the stowed position.

14. The trailer of claim 9, wherein each slideway (28,30) includes a slideway portion (46) fixed to the trailer platform (26) and adapted to slideably receive a carrier member (40), the respective support member (18,20) being pivotally mounted to the carrier member (40).

15. The trailer of claim 14, wherein the pivotal connection between each support member (18,20) and the respective carrier member (40) is located towards the rod end of the cylinder (180).

16. The trailer of claim 15, wherein a locking mechanism (41,42,43,44) is provided between each carrier member (40) and support member (18,20) to lock the support member in one of the generally horizontal stowed position and the generally vertical support position.

17. The trailer of claim 16, wherein each locking mechanism (41,42,43,44) is in the form of a spring loaded ball latch mechanism mounted in the carrier member (40) for engaging recesses (45,45A) provided in a rod (36) extending from the support member (18,20) into the carrier member (40).

18. The trailer of claim 17, wherein a locking mechanism (76,78,80) is provided between each support member (18,20) and the platform (26), to prevent axial pivotting of the support member (18,20) relative to the slideway, in the form of a pin (72) and aperture (80), one of the pin and aperture being provided on a laterally inwardly directed face of the support member (18,20) and the other of the pin and aperture being provided on a laterally outwardly directed face of the platform (26).

19. The trailer of claim 18, wherein a locking mechanism (72,74,70,80) is provided between each carrier member (40) and the respective slideway portion (46) for locking the carrier member (40) laterally relative to the slideway portion (46).

20. The trailer of claim 19, further comprising a support (82) for each support member (18,20) mounted to the platform (26) to support the free end of the support member (18,20) in the horizontal stowed position.

FIG . 1

FIG. 2

FIG. 3

FIG. 4

FIG. 5

FIG.5A

FIG. 6

FIG. 7

FIG. 8A

FIG. 8

FIG. 9